# EUROPEAN PATENT APPLICATION

(11) **EP 3 888 865 A1**
(43) Date of publication of application: **06.10.2021**
(21) Application number: 19878286.4
(22) Date of filing: 28.10.2019
(51) Int. Cl.: B28D 1/00, B44F 9/04, B41M 3/06, B41M 1/34

(54) **METHOD FOR AESTHETICALLY ENHANCING SLABS OF NATURAL STONE OR MARBLE**

(30) Priority: 30.10.2018 ES 201831051
(71) Applicant: Abad Alonso, Luis Alberto, 03660 Alicante (Novelda) (ES); Marco, Sama, 03660 Alicante (Novelda) (ES); Schwars, Frank, 03660 Alicante (Novelda) (ES)
(72) Inventor: Abad Alonso, Luis Alberto, 03660 Alicante (Novelda) (ES); Marco, Sama, 03660 Alicante (Novelda) (ES); Schwars, Frank, 03660 Alicante (Novelda) (ES)
(74) Representative: Martin Alvarez, Juan Enrique
(86) International application number: PCT/ES2019/070730
(87) International publication number: WO 2020/089498

(57) **Abstract**

The present invention provides an aesthetic revalorisation process of marble or natural stone pieces which comprises the steps of providing a digital image of the natural stone or marble piece to be processed; dividing the digital image in finite elements; obtaining the colour defining parameters of each finite element; manual or automatic adjusting of the colour defining parameters of one or more finite elements in order to increase the aesthetic values of the marble or natural stone piece after being processed; producing instructions for applying a physical conditioning mask and for applying a printing mask based on the colour defining parameters adjustment of one or more finite elements; applying the physical conditioning mask to the natural stone or marble piece in an apparatus configured to carry out the physical conditioning under said instructions; and applying the printing mask to the marble or natural stone piece that is being processed in a printing station that operates under said instructions. It is also provided a computer configured or containing instructions and a production line to carry out said process, besides an IT support with the software to configure a computer to carry out said process in said production line.

## Description

### Technical field of the invention

The present invention belongs to the technical field of quarried natural stone or marble handling and processing for its application in building and construction. The present invention provides a natural stone or marble slabs revalorization method by restoring chromatic defects or by applying veining or other visual features in order to increase the natural stone or marble slabs value.

### Background to the invention

Natural stone is obtained by extraction in quarries. The volume of the extracted pieces ranges approximately from three to six cubic metres. The extracted blocks are thereafter cut in boards or slabs of different thicknesses.

Prior to extracting a stone block, it is not possible to know the quality of the boards or slabs produced therefrom, because usually natural stone and marble contain impurities that produce undesired coloration in the stone. Metal or other elements traces cause localised coloration or veins of different hues which drastically decrease the stone commercial value when irregular coloration appears in the pieces. In practice, less than 25 % of the extracted stone is suitable for commercial use. Therefore, there is a need to increase the economic yield in quarries, and, on another hand, to reduce the waste volume in quarries.

Likewise, when natural stone is extracted, in which the presence of veining imparts added value, for example, in Portoro marble, the extraction of pieces without veins devalues the price of the pieces.

Document DE102010025159 describes the use of a scanner and a printer to clone colour patterns for aesthetic results. All pieces obtained are equal and they are obtained from the cloning of a pattern or model which is reproduced on all the piece's surface.

Document ES2573342 describes a natural stone or marble revalorisation method which comprises the following steps: 1) dividing a natural stone piece in a square grid; 2) individual assessment of each square colour; 3) determination of the colour difference between adjacent points; and 4) square colouring with ink micro-drops, be it in a similar colour than an adjacent square to produce a uniform colour piece or in a different colour than the adjacent squares to produce veins.

### Summary of the invention

A first aspect of the present invention provides a computerised method of natural stone or marble pieces revalorisation which comprises the following steps:
- performing or providing a scanning, video image or digital picture of a natural stone or marble piece to be processed;
- dividing the scanning, video image or digital picture in finite elements;
- obtaining colour definition parameters of each finite element;
- automatic or manual adjustment of the colour defining parameters of one or more finite elements in order to increase the natural stone or marble piece's aesthetic value which is being processed;
- producing a first set of instructions or a first computer file that codifies a set of instructions for the application of a physical conditioning mask; and a second set of instructions or second computer file that codifies a set of instructions for the application of a printing mask, both based on the adjustment of the colour defining parameters of one or more finite elements;
- applying the physical conditioning mask to the natural stone or marble piece that is being processed, located in an apparatus configured to apply the physical conditioning mask according to the first set of instructions; and
- applying the printing mask to the to the natural stone or marble piece that is being processed, located in a printing station configured to operate according to the second set of instructions for the application of the printing mask.

The aesthetic value increase of a natural stone or marble piece is produced when a piece of higher chromatic homogeneity is obtained, without the presence of streaks or impurity areas in the piece's colour. However, in marble pieces, the aesthetic value increase thereof is obtained when there is a higher number of veins with a different colour that the surface or face side ground colour.

It is convenient to clarify that the physical conditioning mask is the marble or natural stone piece's profile or relief that needs to be obtained for applying the printing mask and achieve a natural stone or marble piece with a greater aesthetic value than before its processing.

Likewise, it is convenient to clarify that the printing mask is the ink layer which needs to be applied to the marble or natural stone piece to achieve a marble or natural stone piece with a greater aesthetic value than before being processed.

Preferably, the scanning or digital picture of the natural stone or marble to be processed is of high-resolution or high-definition (HD), for example, of 300 ppi (pixels per inch) minimum resolution, approximately. With a high-resolution scanning, video image or digital picture, a pixelated resulting image can be avoided, which could cause problems in the subsequent processing steps, for example, the division of the image in finite elements or the obtention of the mean colour defining parameters of each finite element.

The performing or providing of a scanning, a video image or a digital picture of a natural stone or marble piece to be processed may be by loading an image file. The image file may be in several formats, for example, pdf, xdf, tiff, etc.

Preferably, the finite elements in which the digital picture, image video or scanning is divided are squares. Alternatively, the finite elements may be triangles, rectangles or another suitable shape.

Preferably, the finite elements have an area of approximately 1 mm². With this approximate size of the finite elements, an homogeneous final appearance of the piece is achieved, i.e. not pixelated and at the same time the revalorisation method speed is suitably economical.

The mean colour defining parameters of each finite element may be determined by adjusting or consulting the white-black threshold, the mean colour, the positive/negative mode, and/or the noise filter.

The white-black threshold is obtained by changing the image to grey scale.

The mean colour is the colour applied to generate the texture or fill colour.

The positive/negative mode is used to identify what needs to be deleted or highlighted.

The noise filter is a data filter that removes or eliminates, if desired, small dots that slow down the process and do not provide any aesthetic improvement.

Alternatively or additionally, the mean colour defining parameters of each finite element may comprise RGB parameters (Red-Green-Blue) and/or the Pantone colour classification.

Preferably, the method comprises a screen image display of the scanning, video image or digital picture.

Preferably, the method comprises a screen image update to display the resulting image after the manual or automatic adjustment of the colour defining parameters of at least one finite element to increase the aesthetic value of the natural stone or marble piece after its processing. This step allows direct observation and user or client assessment of the image adjustments and their modification in case they are not suitable, before proceeding to process the natural stone or marble piece.

Preferably, the method comprises the obtention of a previsualisation image file before the natural stone or marble piece is processed in the laser and printing station. By obtaining a previsualisation image file before processing the natural stone or marble pieces, it is possible to show or send to the clients an image of the final result that can be achieved, before making a decision whether to proceed or not with the natural stone or marble piece processing, thus avoiding misunderstandings and with the possibility to modify the final result, a priori, before the processing, based on the observation of the previsualization image.

The obtention of a previsualisation image also allows to perform a cost estimate of the revalorisation process of the material before the initial material is altered.

In some embodiments, the physical conditioning mask is the natural stone or marble piece profile or relief which needs to be obtained in order to apply the printing mask and achieve a natural stone or marble piece which exhibits an identical or very similar appearance to the previsualisation image after the colour defining parameters adjustment.

In some embodiments, it is convenient to clarify that the printing mask is an ink layer which needs to be applied to the natural stone or marble piece in order to achieve a natural stone or marble piece that exhibits an identical or very similar appearance to the previsualisation image shown after the colour defining parameters adjustment.

The previsualisation image files also allow to implement a sample catalogue for clients and to sell the pieces with greater customer satisfaction before being processed. This is very advantageous, because it reduces the risk of the client refusing the pieces after being processed, given that the result had been seen beforehand. With this feature, unexpected product returns, complaints, time wasted and/or loss of the processed material can be avoided.

Preferably, the physical conditioning is performed with a laser. The use of laser to perform the physical conditioning has the advantage that it partially degrades the chemical compounds that produce the imperfect or heterogeneous colour of the pieces.

Preferably, the laser used is of the galvanometric or of the high-power CO₂ type.

Alternatively or additionally, the physical conditioning may be performed with mills with diamond tools and/or high-pressure water jet.

Preferably, the physical conditioning step comprises performing micro-perforations on the piece's surface, the colour of which is to be altered. The objective of these micro-perforations is to create a bed on which the ink micro-drops are deposited.

Alternatively or additionally, the physical conditioning step comprises making recesses or scraping material away on the piece's surface, the colour of which is to be altered.

Preferably, the micro-perforations, the recesses or scrapings have a depth of about 1.5 mm. This depth is enough to properly apply the printing mask and, if needed, primer layers, white colour layers or protective layers, as it will be seen further ahead, at the same time that the chromatic impurities are partially eliminated.

Optionally, the physical conditioning step comprises the sealing of the piece's surface, where the ink is to be deposited.

Preferably, the method comprises applying a primer layer prior to applying the printing layer. A primer layer enhances a proper fixing of the ink applied subsequently.

Preferably, the method comprises applying at least a white colour layer prior to applying the printing layer and after applying the primer layer. Applying a white colour layer ensures that the final colour is more similar to the colour presented in the previsualisation images.

In order to apply the printing mask, inks compatible with the marble or stone piece, for example, water inks, solvent inks, acrylic inks, UV cured inks, polyurethane, etc. may be used.

Preferably, the printing mask application is carried out by depositing ink micro-drops on the natural stone or marble piece. Preferably the micro-drops are of less than one microlitre in volume.

Preferably, the method comprises applying a filling and protective layer after applying the printing mask. The filling and protective layer enables that the piece's final relief is uniform and flat and also protects the printing mask from external agents, such as rain, sunshine, blows, etc.

Optionally, the process may comprise coating the marble or natural stone piece with a resin, preferably a polyester resin, which improves the colour fixing and protects the printing from aging due to environmental conditions. Other resins may be used, such as epoxy, polyurethane, phenolic, etc. A preferred resin type is urethane acrylate. With this method step it is possible to achieve natural stone and marble pieces resistant to the environment and to pedestrian traffic.

Optionally, the method comprises polishing or engraving or sculpting, depending on the desired finishing.

A second aspect of the invention provides a computer configured o that contains instructions for:
- performing or providing a scanning, video image or digital picture of a natural stone or marble piece to be processed;
- dividing the scanning, video image or digital picture in finite elements;
- obtaining colour definition parameters of each finite element;
- user command or automatic adjustment of the colour defining parameters of one or more finite elements in order to increase the natural stone or marble piece's aesthetic value after being processed;
- producing a first set of instructions or a first computer file that codifies a set of instructions for the application of a physical conditioning mask; and a second set of instructions or second computer file that codifies a set of instructions for the application of a printing mask, both based on the adjustment of the colour defining parameters of one or more finite elements;
- sending the first set of instructions or the first computer file that codifies a set of instructions for the application of a physical conditioning mask to the natural stone or marble piece that is being processed to an apparatus configured to apply the physical conditioning mask according to the first set of instructions; and
- sending the second set of instructions or the second computer file that codifies a set of instructions for the application of a printing mask to the natural stone or marble piece that is being processed to a printing station configured to operate according to the second set of instructions.

A third aspect of the invention provides a production line to carry out a computerised process of natural stone or marble pieces aesthetic revalorisation, which comprises:
- a computer according to the second aspect of the invention;
- an apparatus configured to carry out a physical conditioning of the natural stone or marble pieces under the instructions for the application of the physical conditioning mask produced by the computer; and
- a printing station configured to operate under the instructions for the application of the printing mask produced by the computer.

A fourth aspect of the invention provides an information technology support that stores a software with instructions to configure a computer according to the second aspect of the invention.

A fifth aspect of the invention provides a natural stone or marble piece aesthetically revalorised obtainable according to the previously described process.

### Brief description of the Figures

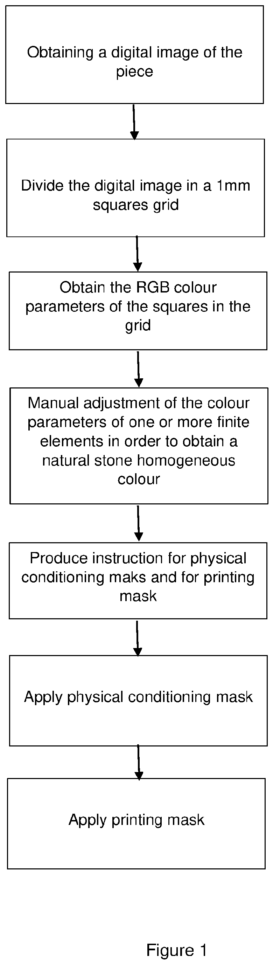

Figure 1 shows a flow diagram of the computerised process for the aesthetic revalorisation of natural stone or marble pieces.

### Detailed description of the invention

Homogeneous colour means that, once decomposed in its RGB primary colours parameters, the different finite elements exhibit a difference of less than 30 units for each primary colour parameter, (red, green and blue), respectively.

In the state-of-the art there are described several methods for the determination of the colour defining parameters of the different finite elements.

Independently of the colour parameter determination method, these can always be expressed by means of their primary colours parameters: red, green and blue, i.e. by means of an RGB vector.

In the RGB colour model (from the English red, green and blue), each colour is represented by a mixture of the three primary light colours, in terms of the intensity of each primary colour with which it is formed. In order to indicate in which proportion each colour is mixed, a value to each parameter corresponding to the primary colours is assigned, in such a way that 0 means that that colour does not form part of the mixture and the intensity of each component is measured according to a scale that ranges from 0 to 255. Therefore, red is obtained by (255, 0, 0), green by (0, 255, 0) and blue by (0, 0, 255).

The absence of colour, i.e. black colour, is obtained when the three components are 0 (0, 0, 0). The combination of two colours in a maximum level, 255, with a third primary colour in a 0 level yields the secondary colours. Thus, yellow is (255, 255, 0), cyan is (0, 255, 255) and magenta is (255, 0, 255). The white colour is formed with the three primary colours at their maximum level (255, 255, 255).

Two finite elements are of different colour when at least one of their colour defining parameters differs in an amount of more than a threshold value. In contrast, two finite elements are in the same colour range or present an homogeneous colour, when the differences between their colour defining parameters are below a threshold value.

The threshold value may depend on the material or on the desired homogeneity degree. A criterion can be established that a difference of 30 units in each primary colour (red, green blue) produces different colours. Different criteria may also be established, be it more restrictive or more relaxed.

Figure 1 shows a block diagram that includes the operations or steps that a computerised process for the aesthetic revalorisation of natural stone or marble pieces comprises, according to the present invention. These steps are:
- performing or providing a digital picture of a natural stone piece to be processed;
- dividing the digital picture or image in a square grid of 1 mm;
- obtaining the colour defining parameters (RGB) of each square of the grid;
- manual adjustment of the colour defining parameters of one or more squares in order to obtain an homogeneous colour of the natural stone that is being processed;
- producing a first set of instructions for the application of a physical conditioning mask; and a second set of instructions for the application of a printing mask, both based on the adjustment of the colour defining parameters of one or more squares;
- applying the physical conditioning mask to the natural stone piece that is being processed, located in an apparatus configured to perform the physical conditioning according to said first set of instructions; and
- applying the printing mask to the to the natural stone piece that is being processed, located in a printing station configured to operate according to said second set of instructions.

## Claims

1. A computerised process of natural stone or marble pieces revalorisation which comprises the following steps:
∘ performing and/or providing a scanning, a video image or a digital picture of a natural stone or marble piece to be processed;
∘ dividing the scanning, video image or digital picture in finite elements;
∘ obtaining colour defining parameters of each finite element;
∘ automatic or manual adjustment of the colour defining parameters of one or more finite elements in order to increase the natural stone or marble piece's aesthetic value which is being processed;
∘ producing first instructions or a first computer file that encodes instructions for the application of a physical conditioning mask; and second instructions or second computer file that encodes instructions for the application of a printing mask, both based on the adjustment of the colour defining parameters of one or more finite elements;
∘ applying the physical conditioning mask to the natural stone or marble piece that is being processed, located in an apparatus configured to perform the physical conditioning according to said first instructions; and
∘ applying the printing mask to the to the natural stone or marble piece that is being processed, located in a printing station configured to operate according to said second instructions.

2. A process according to claim 1 wherein the scanning, video image or digital picture of the natural stone or marble to be processed is of high-resolution or high-definition.

3. A process according to claim 1 or claim 2 wherein the finite elements have an area of approximately 1 mm².

4. A process according to any previous claim wherein the colour defining parameters of each finite element may be determined by adjusting or consulting the white-black threshold, the mean colour, the positive/negative mode, and/or the noise filter.

5. A process according to any previous claim wherein the colour defining parameters of each finite element comprise RGB parameters (Red-Green-Blue) and/or the Pantone colour classification.

6. A process according to any previous claim comprising displaying a screen image of the scanning, video image or digital picture.

7. A process according to claim 6 comprising updating the screen image to display a resulting image after the manual or automatic adjustment of the colour defining parameters of at least one finite element to increase the aesthetic value of the natural stone or marble piece after its processing.

8. A process according to any previous claim comprising obtaining a previsualisation image file of the resulting image after the manual or automatic adjustment of the colour defining parameters of at least one finite element to increase the aesthetic value of the natural stone or marble piece to be processed before the natural stone or marble piece is processed.

9. A process according to any previous claim comprising performing the physical conditioning with a laser.

10. A process according to any previous claim comprising performing the physical conditioning with mills with diamond tools and/or high-pressure water jet.

11. A process according to any previous claim wherein the physical conditioning step comprises performing micro-perforations on a piece's surface area, the colour of which is to be altered.

12. A process according to any previous claim wherein the physical conditioning step comprises making recesses or scraping material away on the piece's surface are, the colour of which is to be altered.

13. A process according to claim 11 or claim 12 wherein the micro-perforations or the recesses or the scrapings have a depth of around 1.5 mm..

14. A process according to any previous claim wherein the physical conditioning step comprises sealing the piece's surface, where the ink is to be deposited.

15. A process according to any previous claim comprising applying a primer layer prior to applying the printing mask.

16. A process according to any previous claim comprising applying at least a white colour layer prior to applying the printing mask and after applying the primer layer.

17. A process according to any previous claim comprising applying the printing mask by depositing ink micro-drops on the natural stone or marble piece.

18. A process according to any previous claim comprising applying a filling and protective layer after applying the printing mask.

19. A process according to any previous claim comprising coating the marble or natural stone piece with a resin after applying the printing mask.

20. A process according to any previous claim comprising polishing or engraving the natural stone or marble piece.

21. A computer configured o that contains instructions for:
∘ receiving or producing a scanning, video image or digital picture of a natural stone or marble piece to be processed;
∘ dividing the scanning, video image or digital picture in finite elements;
∘ obtaining colour definition parameters of each finite element;
∘ user command or automatic adjustment of the colour defining parameters of one or more finite elements in order to increase the natural stone or marble piece's aesthetic value after being processed;
∘ producing first instructions or a first computer file that encodes instructions for the application of a physical conditioning mask; and second instructions or a second computer file that encodes instructions for the application of a printing mask, both based on the adjustment of the colour defining parameters of one or more finite elements;
∘ sending the first instructions or the first computer file that encodes instructions for the application of a physical conditioning mask to the natural stone or marble piece that is being processed to an apparatus configured to carry out the physical conditioning according to said first instructions; and
∘ sending the second instructions or the second computer file that encodes instructions for the application of the printing mask to the natural stone or marble piece that is being processed to a printing station configured to operate according to said second instructions.

22. A production line to carry out a computerised process of natural stone or marble pieces aesthetic revalorisation, which comprises:
∘ a computer according to claim 21;
∘ an apparatus configured to carry out a physical conditioning of the natural stone or marble pieces under the first instructions for the application of the physical conditioning mask produced by the computer; and
∘ a printing station configured to operate under the second instructions for the application of the printing mask produced by the computer.

23. An information technology support that stores a software with instructions to configure or operate a computer according claim 21.

24. A natural stone or marble piece aesthetically revalorised obtainable according to the process of claims 1 to 20.
